# FASCICULE DE BREVET EUROPEEN

(11) **EP 3 520 336 B1**
(45) Date de publication et mention de la délivrance du brevet: **05.01.2022**
(21) Numéro de dépôt: 17787473.2
(22) Date de dépôt: 27.09.2017
(51) Int. Cl.: H04L 12/58

(54) **PROCÉDÉ DE RESTITUTION D'UNE PLURALITÉ DE MESSAGES ÉCHANGÉS AVEC UN AGENT CONVERSATIONNEL**
VERFAHREN ZUR WIEDERGABE VON EINER VIELZAHL VON MIT EINEM GESPRÄCHSAGENT AUSGETAUSCHTEN NACHRICHTEN
METHOD OF PLAYBACK OF A PLURALITY OF MESSAGES EXCHANGED WITH A CONVERSATIONAL AGENT

(30) Priorité: 30.09.2016 FR 1659425
(43) Date de publication de la demande: 07.08.2019
(73) Titulaire: ORANGE, 92130 Issy-les-Moulineaux (FR)
(72) Inventeur: LE HUEROU, Emmanuel, 92326 CHÂTILLON CEDEX (FR); TOUTAIN, François, 92326 CHÂTILLON CEDEX (FR); BEAUFILS, Eric, 92326 CHÂTILLON CEDEX (FR)
(86) Numéro de dépôt international: PCT/FR2017/052602
(87) Numéro de publication internationale: WO 2018/060598

(56) Documents cités:
- US-A1- 2014 122 083

## Description

### Domaine technique

La présente invention se rapporte au domaine des télécommunications et porte plus particulièrement sur un procédé de restitution d'une pluralité de messages échangés entre un terminal et un dispositif de communication.

### Art antérieur

Les communications de type messagerie instantanée connaissent un fort engouement de la part du public depuis quelques années. En effet, ce mode de communication offre plus d'interactivité qu'une communication par courrier électronique tout en étant moins intrusif qu'une communication vocale. L'adoption massive du public pour ce mode de communication et l'arrivée sur le marché de terminaux mobiles à écran tactile s'est accompagnée d'une évolution des interfaces utilisateurs permettant de faciliter ce mode de communication. Cette évolution des interfaces utilisateurs convergent aujourd'hui vers une vue conversationnelle dans laquelle les messages émis et les messages reçus sont présentés dans des bulles disposées de part et d'autre de l'écran du terminal et ordonnées de manière chronologique. A quelques exceptions près, ce type de présentation sous forme de conversation est prédominant sur la plupart des terminaux, toutes marques confondues.

Ce type de communication est à tel point plébiscité qu'il n'est aujourd'hui plus réservé aux échanges entre personnes physiques. En effet, il est possible aujourd'hui d'échanger des messages avec des robots capables d'interpréter des messages envoyés par des utilisateurs et d'y répondre de manière plus ou moins pertinente. On peut citer par exemple des robots spécialisés dans les prévisions météorologiques capables de répondre à des messages du type « *quel temps fera-t-il demain à Paris ?* ». Ainsi, un utilisateur dispose d'une interface unifiée pour communiquer avec d'autres utilisateurs et accéder à des services. Ce type de robot capable d'interagir avec des utilisateurs en échangeant des messages est parfois appelé « *agent conversationnel* »*.*

L'usage de ce type de communication s'élargi encore aujourd'hui avec l'avènement du « *commerce conversationnel* »*.* Le commerce conversationnel met en œuvre des robots adaptés pour permettre à des utilisateurs d'effectuer des commandes de biens ou de services. Ainsi, les utilisateurs n'ont plus besoin de télécharger une application dédiée ou d'accéder à un site Web pour passer commande, et le fournisseur de service n'a pas besoin d'éditer et de maintenir une application ou un site Web.

La messagerie instantanée peut également être utilisée pour communiquer avec des objets connectés. Une telle pratique permet aux utilisateurs de s'épargner le téléchargement d'une application dédiée au pilotage de l'objet. Par exemple, il existe des interrupteurs adaptés pour être commandées par des messages de type SMS envoyés à un numéro associé à la prise. Ainsi, lorsque l'utilisateur envoie le message « ON » vers un numéro de téléphone associé à l'interrupteur, celui-ci interprète le message et actionne un relai permettant de fermer un circuit électrique. Bien entendu, ce type d'objets connectés peut accepter toute sorte de commandes, comme par exemple des commandes visant à connaître l'état de l'interrupteur. Ainsi, en envoyant par exemple un message « ETAT » à un interrupteur tel que celui évoqué précédemment, l'utilisateur pourra recevoir en réponse un message donnant une information sur l'état ouvert ou fermé du circuit électrique commandé par l'interrupteur.

Bien que ce type d'interaction présente comme on l'a vu des avantages indéniables, notamment pour les utilisateurs en termes d'unicité de l'expérience utilisateur et de réduction du nombre d'applications nécessaires pour accéder aux services, la présentation des échanges de messages sous forme de conversation telle qu'elle est mis en œuvre aujourd'hui sur une majorité de terminaux pose certains problèmes.

En particulier, ce mode de communication n'est pas toujours adapté aux échanges avec des agents conversationnels intégrés à des objets connectés.

Par exemple, dans le cas de l'interrupteur décrit précédemment, les différents messages de commandes envoyés par l'utilisateur ainsi que les messages de réponse renvoyés par l'agent conversationnel génèrent au fil du temps un nombre important de messages. Ces messages sont mémorisés par le terminal et affichés dans l'interface de l'application de messagerie instantanée utilisée pour communiquer avec le dispositif. Or, l'historique des messages de commande et des réponses ne présente pas d'intérêt pour l'utilisateur, car seul le dernier état connu de l'interrupteur est utile à l'utilisateur. Ainsi, la mémorisation des messages obsolètes occupe une place inutilement dans la mémoire du terminal, et l'affichage d'une longue séquence d'états « ON » et « OFF » peut sembler confus à l'utilisateur et l'induire en erreur.

La demande de brevet US 2014/122083A1 décrit un système d'administration d'un «chat-bot » et notamment une interface dédiée à l'affichage des messages pour programmer ce chat-bot ». L'interface proposée dans ce document ne s'applique pas la gestion de messages entre un utilisateur d'un terminal et un agent conversationnel.

Il existe donc un besoin pour optimiser la gestion des messages lors de communications avec un agent conversationnel au travers d'une application de messagerie instantanée.

### Résumé de l'invention

A cet effet, l'invention concerne selon un premier aspect un procédé de restitution sur un terminal, d'une pluralité de messages échangés par l'intermédiaire d'un réseau de communication entre le terminal et un agent conversationnel compris dans un dispositif connecté à un réseau de communication, un agent conversationnel étant apte à interpréter et répondre automatiquement à des commandes envoyées par message par le terminal.

Un tel procédé de restitution est remarquable en ce qu'il comporte les étapes suivantes mise en œuvre par le terminal :
- Réception d'un identifiant de l'agent conversationnel par un message reçu de l'agent conversationnel,
- Obtention d'au moins une règle de restitution des messages échangés associée à l'identifiant de l'agent conversationnel reçu en réponse à une requête vers une base de données, et
- Mise en œuvre de la au moins une règle de restitution obtenue lorsqu'un message est émis vers l'agent conversationnel ou reçu de l'agent conversationnel.

A partir d'un identifiant du dispositif ou d'un agent conversationnel, le procédé obtient une règle de gestion des messages échangés adaptée pour traiter et présenter les messages échangés avec le dispositif ou l'agent conversationnel. Une telle règle de restitution peut être obtenue à partir d'un serveur, d'une base de données locale du terminal ou par tout autre moyen. Par exemple, dans le cas où un terminal échange des messages avec un interrupteur tel que discuté précédemment, le terminal obtient un identifiant de l'interrupteur ou de l'agent conversationnel intégré à l'interrupteur. A partir de cet identifiant, le terminal obtient une ou plusieurs règles de gestion des messages échangés avec l'interrupteur. De telles règles permettent par exemple de déterminer des messages qui peuvent être effacés ou qui doivent être conservé. Ces règles peuvent encore concerner certaines dispositions quant à la manière dont les messages reçus ou envoyés sont affichés sur l'écran du terminal. Les messages peuvent ainsi être restitués de façon optimale sur le terminal.

Dans le cadre de cette description, on entend par agent conversationnel un automate adapté pour répondre automatiquement à des messages envoyés par un utilisateur. Un tel agent conversationnel est notamment adapté pour interpréter des commandes ou des mots clefs compris dans des messages qu'il reçoit.

L'identifiant de l'agent conversationnel permet de déduire le comportement de l'agent, c'est à dire les différents types de messages qu'il est capable d'émettre ou de recevoir. Un tel identifiant peut correspondre par exemple à une catégorie particulière d'agent conversationnel, à une version d'un agent conversationnel particulier.

Le procédé permet d'identifier le dispositif ou l'agent conversationnel avec lequel les messages sont échangés à partir d'une donnée d'identification obtenue à partir d'un message transmis par le dispositif ou l'agent conversationnel. La donnée d'identification peut par exemple être comprise dans un champ particulier du message, dans le corps du message ou elle peut encore consister en une adresse d'expédition du message. De cette façon, un utilisateur du terminal n'a pas besoin d'identifier lui-même le dispositif distant pour obtenir les règles de gestion correspondantes.

Une donnée permettant d'identifier l'agent conversationnel peut être obtenue à partir d'une base de données du premier dispositif. Par exemple, la donnée d'identification peut être mémorisée dans un carnet d'adresses du terminal dans la fiche d'un contact correspondant au dispositif ou au service mettant en œuvre l'agent conversationnel. Ainsi, lorsqu'un message est reçu ou émis vers l'agent conversationnel, le terminal peut effectuer une requête dans le carnet d'adresses afin de déterminer un identifiant de l'agent conversationnel.

Selon un mode de réalisation, la au moins une règle de restitution des messages échangés est enregistrée en association avec l'identifiant de l'agent conversationnel dans la base de données associée au terminal et est obtenu via cette base de données.

Selon un mode particulier de réalisation, le procédé est tel que l'étape de mise en œuvre de la au moins une règle comprend la suppression d'au moins un message échangé précédemment lorsqu'un nouveau message est échangé.

A la réception d'un message particulier en provenance d'un agent conversationnel, ou bien lorsqu'un message particulier est émis à destination de cet agent, la règle de restitution est mise en œuvre. La mise en œuvre de cette règle peut comporter l'exécution d'une commande de suppression de certains messages reçus ou émis précédemment. Par exemple, la réception d'un message en provenance d'un agent conversationnel indiquant qu'un interrupteur est dans l'état fermé peut déclencher la suppression de tous les messages reçus précédemment relatifs à l'état de l'interrupteur. Une telle disposition permet d'éviter que des messages obsolètes occupent inutilement la mémoire du terminal et contribue à rendre plus lisible l'état courant d'un dispositif ou d'un service auquel un agent conversationnel est associé.

Selon un mode particulier de réalisation, le procédé est tel qu'il comporte en outre une étape d'obtention d'une description d'interface utilisateur en fonction de l'identifiant reçu et une étape de restitution sur un écran du terminal d'une interface utilisateur correspondant à ladite description.

L'identifiant de l'agent conversationnel permet de déterminer les messages qu'il est susceptible d'émettre ainsi que les commandes qu'il peut accepter. Le procédé propose alors d'obtenir, par exemple en la téléchargeant à partir d'un serveur, une description d'une interface utilisateur adaptée pour présenter les messages de manière optimale sur le terminal. L'interface utilisateur du terminal peut ainsi s'adapter automatiquement à de nouveaux services ou dispositifs contrôlables par une messagerie instantanée. De cette manière, lorsqu'un utilisateur fait l'acquisition d'un nouveau dispositif connecté, une interface de contrôle adaptée sera immédiatement disponible pour l'utilisateur.

Selon une réalisation particulière, le procédé est tel que la au moins une règle de restitution comprend une association entre un message particulier et un élément de l'interface utilisateur restituée.

Le procédé propose ainsi d'associer un élément d'interface utilisateur à un message particulier. Par exemple, la règle peut comporter une association entre la réception d'un message contenant le mot clef « ON » à un pictogramme représentant une ampoule. De cette façon, à la réception d'un message indiquant qu'un interrupteur connecté est dans l'état fermé, le terminal peut afficher par exemple un pictogramme représentant une ampoule allumée, l'historique des messages précédents n'étant pas présenté à l'écran. Le procédé permet ainsi de présenter l'information contenue dans les messages d'une façon optimale, permettant ainsi d'éviter que l'utilisateur du terminal soit induit en erreur par une multitude de messages textuels obsolètes relatifs aux états précédents de l'interrupteur. Une telle disposition permet également d'optimiser l'espace occupée sur l'écran d'un terminal, l'information véhiculée dans le message étant présentée de manière plus compacte.

Selon un mode de réalisation particulier, le procédé est tel que la au moins une règle de restitution comprend une association entre un message à transmettre et un élément de l'interface utilisateur.

Un message pré-formaté peut être associé à un élément d'interaction d'une interface utilisateur. Ainsi, l'utilisateur peut provoquer l'émission d'un message de commande à destination de l'agent conversationnel par une simple action sur un bouton. Une telle disposition permet à l'utilisateur de contrôler avec aisance et rapidité un dispositif associé à un agent conversationnel qui interagit au travers d'une messagerie instantanée.

Selon un mode particulier de réalisation, alternatif à l'invention revendiquée, le procédé est remarquable en ce qu'au moins une
règle de restitution est comprise dans un message reçu et/ou au moins une description d'interface utilisateur est comprise dans un message reçu.

Le procédé alternatif à l'invention revendiquée prévoit ainsi qu'une règle de restitution des messages est comprise dans un message en provenance de l'agent conversationnel et reçu par le terminal. Ainsi, le terminal obtient immédiatement une règle adaptée pour restituer un ou plusieurs messages échangés, sans effectuer de requête vers un serveur. Une ou plusieurs descriptions d'interface utilisateur peuvent également être comprises dans un message. Il peut s'agir d'un message dédié envoyé par un agent conversationnel en réponse à une requête particulière.

Selon un autre aspect, l'invention concerne un terminal comprenant un dispositif de restitution apte à restituer une pluralité de messages échangés par l'intermédiaire d'un réseau de communication entre le terminal et un agent conversationnel compris dans un dispositif connecté à un réseau de communication, un agent conversationnel étant apte à interpréter et répondre automatiquement à des commandes envoyées par message par le terminal de restitution, le terminal étant remarquable en ce qu'il comporte des moyens:
- De réceptiond'un identifiant de l'agent conversationnel par un message reçu de l'agent conversationnel,
- d'obtention d'au moins une règle de restitution des messages échangés associée à l'identifiant de l'agent conversationnel reçu en réponse à une requête vers une base de données, et
- de mise en œuvre de la au moins une règle de restitution obtenue lorsqu'un message est émis vers l'agent conversationnel ou reçu de l'agent conversationnel.

Dans un mode particulier de réalisation, les différentes étapes du procédé selon l'invention sont déterminées par des instructions de programmes d'ordinateurs.

En conséquence, l'invention vise également un programme d'ordinateur comportant des instructions pour l'exécution des étapes du procédé de restitution, lorsque ledit programme est exécuté par un processeur.

Enfin, l'invention concerne un support d'informations lisible par un processeur sur lequel est enregistré un programme d'ordinateur comprenant des instructions pour l'exécution des étapes du procédé de restitution.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le terminal 100 est ici un téléphone mobile de type « smartphone » disposant de moyens de communications adaptés pour se connecter à un ou plusieurs réseaux de communication, tels que des réseaux Wifi ou des réseaux cellulaires, ainsi que d'une mémoire et d'un processeur configurés pour exécuter des instructions de programme d'ordinateur. L'invention décrite ci-après peut toutefois être mise en œuvre sur d'autres terminaux, tels que sur une tablette ou encore ordinateur personnel. Le terminal 100 est en outre adapté pour communiquer selon au moins un protocole de messagerie instantanée avec d'autres terminaux ou dispositifs. Par exemple, le terminal 100 peut émettre et recevoir des messages de type SMS (Short Message Service) par l'intermédiaire d'un réseau cellulaire, ou encore mettre en œuvre le standard RCS (Rich Communication Suite), le protocole SIP SIMPLE, Jabber ou tout autre protocole adapté pour envoyer et recevoir des messages. En particulier, le terminal 100 peut échanger des messages instantanés avec le dispositif 101 au travers du réseau 102.

Le dispositif 101 est un objet connecté disposant de moyens de communication adaptés pour se connecter à un réseau de communication tel que le réseau 102 et recevoir des commandes en provenance d'autres dispositifs. Pour cela, le dispositif 101 comprend une interface réseau comme par exemple une interface Wifi, GSM ou 3G ou 4G lui permettant d'échanger des données avec d'autres dispositifs, et notamment avec le terminal 100.

Selon une réalisation particulière, le dispositif 101 est un interrupteur connecté comprenant un relais configuré pour ouvrir ou fermer un circuit électrique en fonction de commandes reçues par l'intermédiaire du réseau 102. Toutefois, l'invention ne se limite pas à un tel objet connecté et peut concerner d'autres types de dispositifs ou de services plus ou moins complexes adaptés pour être commandés par des échanges de messages de types messages instantanés tels que des SMS, MMS ou autres protocoles d'échanges de messages instantanés. Par exemple, il peut s'agir d'un dispositif de commande local pour commander d'autres équipements tel qu'un centre de contrôle domotique adapté pour piloter un système de chauffage ou de climatisation, de fermeture automatique de volets ou tout autre appareil pouvant être commandé à distance.

L'interrupteur 101 comprend en outre un agent conversationnel 104 adapté pour interpréter et répondre automatiquement à des commandes transmises par le terminal 100. Pour cela, l'agent conversationnel comprend un module d'interprétation des messages reçus. Un tel module d'interprétation peut comprendre un analyseur syntaxique et/ou sémantique adapté pour déduire une commande à partir d'un message rédigé en langage naturel par un utilisateur. Dans un mode de réalisation particulier, l'agent conversationnel 104 est mis en œuvre par un programme d'ordinateur comportant des instructions adaptées pour interpréter le contenu de messages reçus, contrôler un relais 105 selon les messages interprétés et émettre des messages relatifs à l'état du relais 105. L'agent conversationnel 104 du dispositif 101 est configuré pour exécuter certaines actions à la réception de certains messages. Par exemple, l'agent conversationnel 104 peut être configuré pour fermer le circuit électrique 106 à l'aide du relais 105 lorsqu'un message contenant le mot clef « on » est reçu et ouvrir le circuit électrique 106 à l'aide du relais 105 lorsqu'un message contenant le mot clef « off » est reçu. L'agent conversationnel 104 est en outre configuré pour envoyer automatiquement un message contenant une indication sur l'état ouvert ou fermé du circuit 106 lorsqu'il reçoit un message contenant le mot clef « état ». Ainsi, le terminal 100 peut contrôler l'interrupteur 101 en envoyant des messages « on » et « off » à destination de l'interrupteur 101 et connaître l'état de l'interrupteur en envoyant le message « état ».

Un agent conversationnel peut être adapté pour recevoir un nombre plus ou moins important de commandes différentes selon le dispositif ou le service auquel il est associé, lesdites commandes pouvant éventuellement comporter des paramètres. Par exemple, un agent conversationnel configuré pour commander un système de chauffage domestique peut accepter des commandes comportant un ou plusieurs paramètres de température. Selon un autre exemple, un tel agent conversationnel peut être associé à un service en ligne, comme par exemple un service de réservation, et peut alors être configuré pour recevoir des messages comportant des commandes complexes assorties de paramètres, comme par exemple des horaires de début et de fin de réservation, et envoyer des messages de réponse complexes, comportant elles-aussi des paramètres variables d'un message à l'autre.

Un identifiant IAC est associé à l'agent conversationnel 104 du dispositif 101. Cet identifiant est associé de manière non ambigüe au comportement de l'agent conversationnel, c'est-à-dire aux commandes qu'il est capable d'interpréter et aux réponses qu'il est susceptible d'envoyer.

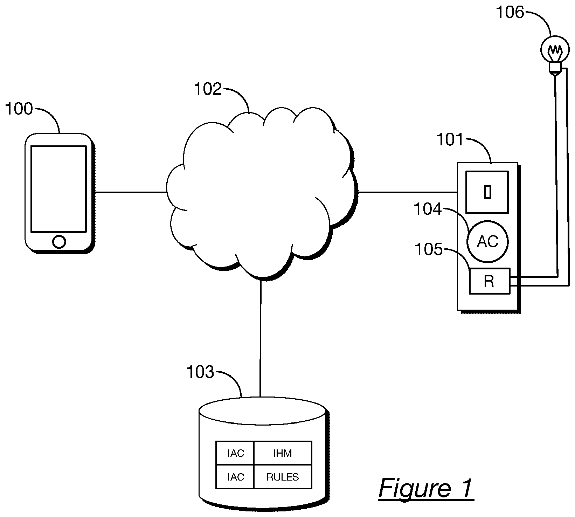

L'architecture de la figure 1 comprend également une base de données 103. Cette base de données est par exemple localisée dans un serveur accessible depuis le terminal 100 par l'intermédiaire du réseau 102. Le terminal 100 peut interroger la base de données 103 à partir de requêtes http ou SQL, ou via d'autres types de requêtes adaptées. Selon une réalisation particulière, la base de données 103 est localisée dans le terminal 100 et est accessible directement par une API (application Programming Interface) prévue à cet effet. La base de données 103 permet en particulier de mémoriser des données en association avec l'identifiant de l'agent conversationnel 101.

Selon l'invention, la base de données 103 mémorise en association avec un identifiant d'un agent conversationnel, au moins une règle de restitution des messages échangés entre un terminal et l'agent conversationnel identifié. Ainsi, un terminal tel que le terminal 100 peut obtenir une ou plusieurs règles de restitution des messages en effectuant une requête vers la base de données 103, la requête comprenant l'identifiant de l'agent conversationnel avec lequel les messages sont échangés.

Une règle de restitution au sens de l'invention permet de décrire la façon dont les messages reçus ou envoyés par un terminal sont présentés à l'utilisateur et/ou mémorisés par le terminal, dans le but d'optimiser la lisibilité des informations présentées à l'utilisateur et ainsi limiter les risques d'erreurs d'interprétation par l'utilisateur, de telles erreurs pouvant conduire à des incidents techniques. Une telle optimisation de la présentation des messages permet en outre de réduire l'espace mémoire occupé par des messages obsolètes ou inutiles.

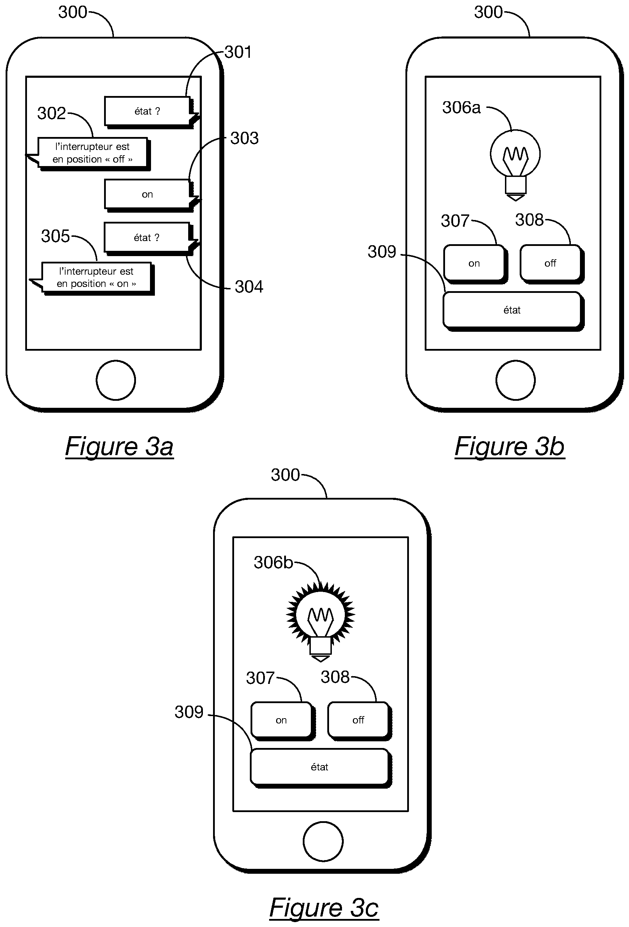

Par exemple, une règle de restitution peut prévoir qu'à la réception par le terminal 100 d'un message comportant une indication relative à l'état de l'interrupteur 101, tous les messages précédents sont supprimés. En référence à la figure 3a, une telle règle de restitution peut prévoir qu'à la réception du message 305, les messages 301, 302, 303 et 304 sont supprimés, la seule information pertinente pour l'utilisateur étant l'indication contenue dans le message 305.

Selon une réalisation particulière de l'invention, la base de données 103 mémorise, en association avec un identifiant d'agent conversationnel, une description d'interface utilisateur. Une telle description peut consister en un fichier au format HTML ou XML, ou tout autre format adapté pour décrire une interface utilisateur. Ainsi, un terminal tel que le terminal 100 peut obtenir auprès de la base de données une description d'une interface utilisateur en fonction de l'identifiant d'un agent conversationnel et restituer une interface adaptée pour mettre en forme les messages échangés avec l'agent conversationnel dont l'identifiant est associé à la description d'interface, de manière à présenter de manière optimale l'information contenue dans les messages échangés.

Selon un mode de réalisation particulier, une règle de restitution comprend une association entre un message particulier et un élément de l'interface utilisateur restituée. Par exemple, une règle de restitution peut prévoir qu'à la réception par le terminal 100 d'un message relatif à l'état de l'interrupteur, un élément d'interface utilisateur est modifié pour refléter une information transmise dans le message.

Les figures 3b et 3c illustrent un exemple d'interface utilisateur adaptée pour restituer des messages échangés entre le terminal 100 et l'agent conversationnel du dispositif 101. Une telle interface est restituée par le terminal 100 à partir d'une description associée à un identifiant de l'agent conversationnel obtenue auprès de la base de données 103. Le pictogramme 306a et 306b des figures 3b et 3c est associé à la réception d'un message comportant une indication relative à l'état du dispositif 101. Une règle de restitution obtenue auprès de la base de données 103 associe dans cet exemple la réception du message 302 avec l'affichage du pictogramme 306a et la réception du message 305 avec l'affichage du pictogramme 306b. Ainsi, l'utilisateur sait immédiatement dans quel état se trouve l'interrupteur, sans avoir à parcourir l'historique des messages pour déterminer l'état courant de l'interrupteur.

Lorsque l'agent conversationnel d'un dispositif tel que par exemple une centrale domotique ou un service de réservation en ligne est configuré pour échanger des messages comportant des informations complexes assorties par exemple de paramètres pouvant varier d'un message à l'autre, tels que des plages horaires, des tarifs de transaction, des températures ou tout autre paramètre pouvant varier pour un type de réponse donné, une règle de restitution peut comporter une description formelle du message adaptée pour en extraire les informations pertinentes. Cette description formelle peut correspondre à une expression régulière, des règles syntaxiques ou une grammaire à partir de laquelle un analyseur syntaxique et sémantique du terminal 100 peut extraire les informations pertinentes des messages reçu afin qu'elle puisse être associées, au travers de règles de restitution, à des éléments d'interface utilisateur.

Selon un mode particulier de réalisation de l'invention, une règle de restitution comprend une association entre un message à transmettre et un élément de l'interface utilisateur. Par exemple, une règle de restitution obtenue auprès de la base de données 103 peut prévoir que le bouton 307 représenté sur la figure 3b est associé à l'envoi d'un message tel que le message 303 de la figure 3a. Ainsi, une simple interaction de l'utilisateur sur le bouton 307 permet la préparation d'un message adapté pour provoquer la fermeture du circuit électrique 106 et l'envoi de ce message à destination de l'agent conversationnel. L'utilisateur n'a pas à composer lui-même le message, ce qui permet d'éviter des erreurs par exemple liées à des fautes de frappe ou à la méconnaissance de commandes propres au dispositif et rend l'opération de contrôle plus rapide. De même, des éléments d'interactions 308 et 309 peuvent être associés à l'envoi de messages permettant respectivement d'ouvrir et de connaître l'état du circuit 106. Selon une réalisation particulière, un élément d'interaction peut être associé à la transmission de plusieurs messages de commande. Par exemple, le bouton 307 peut être associé à la transmission consécutive des messages 303 et 304.

Une telle association entre une règle et un élément d'interface utilisateur peut être réalisée en identifiant de manière unique d'une part chaque élément d'interface dans la description de l'interface utilisateur et d'autre part chaque type de message pouvant être émis ou reçu par l'agent conversationnel. De cette façon, une règle de restitution peut faire référence à un message particulier et un élément d'interface particulier afin d'associer l'envoi ou la réception d'un message avec un élément d'interface.

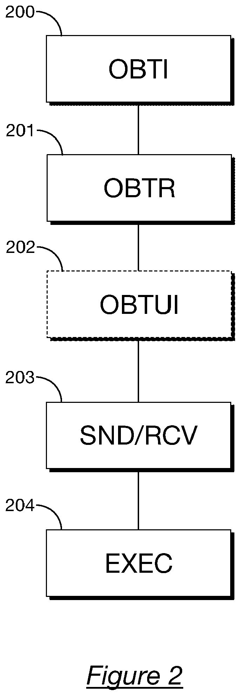

La figure 2 illustre les principales étapes du procédé de restitution selon un mode de réalisation particulier de l'invention.

Lors d'une première étape 200, le terminal 100 obtient un identifiant de l'agent conversationnel AC du dispositif 101. Comme exposé précédemment, un tel identifiant est déterminé par les messages que l'agent conversationnel est capable d'interpréter et réponse qu'il peut transmettre. D'une manière générale, l'identifiant est représentatif de l'automate qui régit les différents états et entrées-sorties de l'agent conversationnel. Il peut s'agir par exemple d'un numéro de téléphone, d'une URL ou d'une partie d'une URL, d'un numéro de série ou encore d'un numéro unique tel qu'un GUID (abréviation de l'anglais Globally Unique IDentifier, en français : « identificateur global unique »).

Selon une réalisation particulière, l'identifiant de l'agent conversationnel est obtenue à partir d'un message reçu en provenance de l'agent conversationnel. L'identifiant peut être compris dans une entête d'un message ou bien dans le corps d'un message envoyé par l'agent conversationnel. Il peut s'agir par exemple d'un numéro de téléphone utilisé par l'interface de communication du dispositif dans lequel l'agent conversationnel est intégré.

Selon un mode particulier de réalisation, l'identifiant de l'agent conversationnel est obtenu à partir d'une base de données associée au terminal. L'identifiant peut ainsi avoir été mémorisé sur le terminal lors d'une phase préalable de configuration. Il peut s'agir d'un carnet d'adresses local au terminal ou encore un carnet d'adresses réseau associé au terminal. Selon un mode de réalisation particulier, une phase de configuration est initiée lorsque les coordonnées du dispositif sont ajoutées à un carnet d'adresses du terminal. Cette phase de configuration peut inclure un échange de messages initial au cours duquel le dispositif transmet au terminal des données de configuration comprenant en particulier un identifiant de l'agent conversationnel. Alternativement, une telle la phase de configuration initiale peut comprendre la saisie par l'utilisateur d'un identifiant fournit par exemple dans une documentation du dispositif. L'identifiant peut aussi être transmis au terminal par la lecture optique d'un code barre ou à deux dimensions, ou bien par l'intermédiaire d'une communication NFC (Near Field Communication).

A l'étape 201, le terminal obtient au moins une règle de restitution des messages échangés en fonction de l'identifiant de l'agent conversationnel obtenu à l'étape 200.

Pour cela, le terminal 100 interroge la base de données 103 afin d'obtenir une ou plusieurs règles de restitution associées à l'identifiant. L'interrogation peut se faire au moyen d'une requête http ou SQL contenant l'identifiant de l'agent conversationnel. En retour, le terminal reçoit une ou plusieurs règles de restitution. Ces règles peuvent être transmises dans un quelconque format approprié, tel que par exemple dans un message conforme au format XML.

Selon un mode particulier de réalisation alternatif à l'invention, une règle de restitution est obtenue à partir d'un message en provenance du dispositif 101, la règle étant comprise dans le message. Le message comprenant la règle de restitution peut être obtenu suite à l'envoi par le terminal d'une commande à destination du dispositif 101, la commande comportant une indication selon laquelle au moins une règle de restitution des messages est demandée. Ainsi, le terminal peut obtenir une ou plusieurs règles de restitution directement à partir du dispositif, sans faire intervenir de serveur tiers.

Lors d'une étape optionnelle 202, le terminal obtient une description d'interface utilisateur en fonction de l'identifiant obtenu à l'étape 200 et restitue sur un écran du terminal une interface utilisateur correspondant à ladite description obtenue.

Pour cela, le terminal 100 interroge la base de données 103 afin d'obtenir une ou plusieurs règles de restitution associées à l'identifiant. L'interrogation de la base de données peut se faire au moyen d'une requête http ou SQL contenant l'identifiant de l'agent conversationnel. En retour, le terminal reçoit la description d'une interface utilisateur adaptée pour présenter les messages. L'interface utilisateur peut être une interface graphique destinée à être affichée sur un écran du terminal. En variante, l'interface peut être une interface vocale ou encore une interface haptique.

Selon un mode particulier de réalisation de l'invention, la description d'une interface utilisateur adaptée aux messages pouvant être interprétés et envoyés par l'agent conversationnel du dispositif 101 est obtenue à partir d'un message en provenance du dispositif 101, la description d'interface étant comprise dans le message reçu par le terminal. Le message comprenant la règle de restitution peut être obtenu suite à l'envoi par le terminal d'une commande à destination du dispositif 101, la commande comportant une indication selon laquelle au moins une interface utilisateur est demandée. Ainsi, le terminal peut obtenir une description d'interface adaptée pour présenter les échanges avec le dispositif 101 directement à partir du dispositif, sans faire intervenir de serveur tiers.

La réception ou l'envoi d'un message à l'étape 203 déclenche la mise en œuvre d'au moins une règle de restitution à l'étape 204. Lors de cette étape, une règle de restitution correspondant au message envoyé ou reçu est sélectionnée puis appliquée à un ou plusieurs messages échangés avec le dispositif 101. Par exemple, la réception d'un message de notification de changement d'état en provenance du dispositif 101 d'un état « circuit ouvert » vers un état « circuit fermé », tel que par exemple le message 305 représenté sur la figure 3a, peut déclencher l'exécution d'une règle selon laquelle des messages de même type reçus précédemment, comme par exemple le message 302 de la figure 3a, sont supprimés de l'historique. Une telle disposition permet d'éviter que des messages obsolètes reflétant par exemple un état révolu du dispositif n'encombrent l'écran du terminal. Selon une réalisation particulière, lorsqu'une description d'interface utilisateur a été obtenue, la réception ou l'envoi d'un message peut déclencher une modification d'un ou plusieurs éléments d'interface de manière à refléter l'information contenue dans le message. Par exemple, la réception du message 305 représenté sur la figure 3a alors qu'une interface conforme à une description obtenue à l'étape 202 est restituée sur l'écran du terminal, peut déclencher le remplacement du pictogramme 306a représentant une ampoule éteinte par le pictogramme 306b de la figure 6 qui représente une ampoule allumée. L'utilisateur peut ainsi connaître immédiatement l'état du circuit commandé par l'interrupteur 101.

Ainsi, le procédé de restitution selon la présente invention permet d'améliorer la lisibilité des informations échangées avec un dispositif ou service communiquant par l'intermédiaire d'une messagerie instantanée. La présentation des messages peut en outre être modifiée sans intervenir sur le dispositif ou le service, par une simple mise à jour des données associées à l'identifiant de l'agent conversationnel sur un serveur ou une base de données.

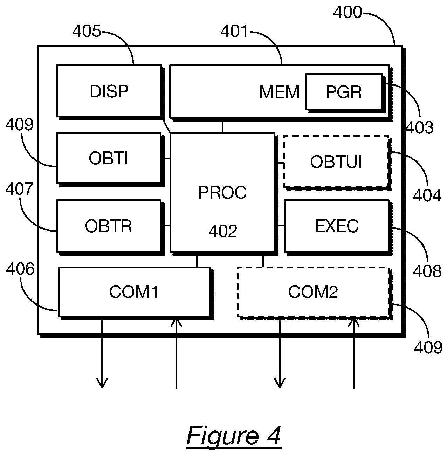

La figure 4 illustre l'architecture d'un dispositif adapté pour mettre en œuvre le procédé de restitution.

Le dispositif comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en œuvre le procédé de restitution tel que décrit dans l'invention en référence à la figure 2, et notamment les étapes d'obtention d'un identifiant de l'agent conversationnel, d'obtention, en fonction de l'identifiant obtenu, d'au moins une règle de restitution des messages échangés, et de mise en œuvre de la au moins une règle de restitution lorsqu'un message est émis ou reçu.

À l'initialisation, les instructions du programme d'ordinateur 403 sont par exemple chargées dans une mémoire RAM (Random Access Memory) avant d'être exécutées par le processeur de l'unité de traitement 402. Le processeur de l'unité de traitement 402 met en œuvre les étapes du procédé de restitution selon les instructions du programme d'ordinateur 403.

Pour cela, le dispositif comporte une interface 406 vers un réseau de communication adapté pour communiquer avec d'autres dispositifs, et notamment avec un agent conversationnel configuré pour communiquer selon un protocole de messagerie instantané. L'interface de communication 406 est par exemple un module d'accès à un réseau cellulaire de type GSM, 3G ou 4G adapté pour échanger des messages conformes à un protocole de messagerie instantanée avec un agent conversationnel, comme par exemple des messages de type SMS, SIP SIMPLE ou conformes au standard RCS. Il peut s'agir aussi d'une interface Wifi, Bluetooth ou Ethernet permettant au dispositif de communiquer avec l'agent conversationnel par l'intermédiaire du réseau Internet ou d'un réseau local. De façon optionnelle, le dispositif comprend également une seconde interface de communication adaptée pour échanger des messages avec d'autres dispositifs par l'intermédiaire d'un second réseau de communication. Cette seconde interface permet notamment d'échanger des messages avec un serveur hébergeant une base de données dans laquelle sont stockées, en association avec un identifiant d'un agent conversationnel, des règles de restitution ou des descriptions d'interfaces utilisateurs. Il peut s'agir d'une interface 3G, 4G, Wifi, Bluetooth ou Ethernet permettant au dispositif de communiquer avec une base de données par l'intermédiaire du réseau Internet.

Le dispositif 400 comprend des moyens 409 d'obtention d'un identifiant de l'agent conversationnel. Selon une réalisation particulière, de tels moyens sont adaptés pour obtenir un identifiant d'un agent conversationnel à partir d'un message reçu en provenance de cet agent. Il peut s'agir par exemple d'un programme d'ordinateur adapté pour être chargé dans la mémoire 401 et exécuté sur le processeur PROC de l'unité de traitement 402, le programme comportant des instructions pour obtenir un message en provenance d'un agent conversationnel afin d'en extraire une information d'identification de l'agent conversationnel. Selon une réalisation particulière, les moyens 409 sont adaptés pour obtenir un identifiant d'un agent conversationnel à partir d'une base de données associée au terminal. Il peut s'agir par exemple d'un programme d'ordinateur adapté pour être chargé dans la mémoire 401 et exécuté sur le processeur PROC de l'unité de traitement 402, le programme comportant des instructions pour construire une requête SQL adaptée pour interroger une base de données associée au terminal, comme par exemple un carnet d'adresses, afin d'obtenir en réponse un identifiant de l'agent conversationnel.

Le dispositif 400 comprend en outre des moyens 407 d'obtention d'au moins une règle de restitution associée à l'identifiant d'un l'agent conversationnel. Ces moyens peuvent correspondre à un programme d'ordinateur adapté pour être exécuté par le processeur PROC de l'unité de traitement 402. Un tel programme comprend des instructions configurées pour construire une requête http ou SQL à destination d'un serveur hébergeant une base de données dans laquelle sont stockées des règles de restitution en association avec un identifiant d'un agent conversationnel, pour transmettre la requête ainsi construite au serveur hébergeant la base de données et recevoir en réponse un message comportant une règle de restitution associée à l'identifiant transmis dans la requête.

De manière optionnelle, le dispositif 400 comprend des moyens 404 d'obtention d'une description d'interface utilisateur associée à un identifiant d'un agent conversationnel. Ces moyens peuvent être mis en œuvre par un programme d'ordinateur adapté pour être exécuté par le processeur PROC de l'unité de traitement 402. Un tel programme comprend des instructions configurées pour construire une requête http ou SQL à destination d'une entité telle qu'un serveur hébergeant une base de données dans laquelle sont stockées des descriptions d'interface utilisateur en association avec des identifiants d'agents conversationnels, pour transmettre la requête ainsi construite à ladite entité hébergeant la base de données et recevoir en réponse un message comportant une description d'interface utilisateur associée à l'identifiant transmis dans la requête.

Le dispositif 400 comprend également un écran 405 adapté pour restituer des messages reçus et/ou des interfaces utilisateurs. Selon un mode de réalisation particulier, l'écran comprend des moyens d'interaction permettant à l'utilisateur du terminal d'interagir avec des éléments d'interface utilisateur, lesdits éléments d'interface utilisateur pouvant être, dans un mode de réalisation particulier, associés à une règle de transmission d'au moins un message à destination d'un agent conversationnel auquel est associé la règle. Il peut s'agir par exemple d'un écran tactile.

Le dispositif 400 comporte enfin des moyens de mise en œuvre de la au moins une règle de restitution obtenue lorsqu'un message est émis ou reçu. Ces moyens peuvent être mis en œ uvre par un programme d'ordinateur adapté pour être exécuté par le processeur PROC de l'unité de traitement 402. Un tel programme comprend des instructions configurées pour réaliser une analyse syntaxique et une interprétation de la règle de restitution, une détection des messages concernés par la règle à partir d'un type et/ou une catégorie de message reçus et/ou envoyés, et l'exécution d'une action sur les messages concernés. Une telle action peut par exemple être une suppression du message, un réordonnancement des messages, ou encore un remplacement d'un message par un autre message ou par un contenu prédéterminé. L'action peut également consister en une modification d'un élément d'interface utilisateur en réponse à l'envoi ou à la réception d'un message particulier ou d'un message dont le contenu est particulier.

Le dispositif peut être intégré dans un terminal de type smartphone, montre connectée, tablette ou encore un ordinateur portable.

## Revendications

1. Procédé de restitution sur un terminal, d'une pluralité de messages échangés par l'intermédiaire d'un réseau de communication (102) entre le terminal (100) et un agent conversationnel (104) compris dans un dispositif (101) connecté au réseau de communication, un agent conversationnel étant apte à interpréter et répondre automatiquement à des commandes envoyées par message par le terminal, le procédé étant **caractérisé en ce qu'**il comporte les étapes suivantes mise en œuvre par le terminal (100) :
- Réception (200) d'un identifiant de l'agent conversationnel (104) par un message reçu de l'agent conversationnel,
- Obtention (201) d'au moins une règle de restitution des messages échangés associée à l'identifiant de l'agent conversationnel reçu en réponse à une requête vers une base de données (103), et
- Mise en œuvre (204) de la au moins une règle de restitution obtenue lorsqu'un message est émis vers l'agent conversationnel ou reçu de l'agent conversationnel.

2. Procédé selon la revendication 1, **caractérisé en ce que** la au moins une règle de restitution des messages échangés est enregistrée en association avec l'identifiant de l'agent conversationnel dans la base de données associée au terminal et est obtenu via cette base de données.

3. Procédé selon l'une quelconque des revendications précédentes **caractérisé en ce que** l'étape de mise en œuvre de la au moins une règle comprend la suppression d'au moins un message échangé précédemment lorsqu'un nouveau message est échangé.

4. Procédé selon l'une quelconque des revendications précédentes **caractérisé en ce qu'**il comporte en outre une étape d'obtention d'une description d'interface utilisateur en fonction de l'identifiant reçu et une étape de restitution sur un écran du terminal d'une interface utilisateur correspondant à ladite description.

5. Procédé selon la revendication 4, **caractérisé en ce que** la au moins une règle de restitution comprend une association entre un message particulier et un élément de l'interface utilisateur restituée.

6. Procédé selon l'une quelconque des revendications 4 et 5 **caractérisé en ce que** la au moins une règle de restitution comprend une association entre un message à transmettre et un élément de l'interface utilisateur.

7. Terminal comprenant un dispositif de restitution apte à restituer une pluralité de messages échangés par l'intermédiaire d'un réseau de communication (102) entre le terminal (100) et un agent conversationnel (104) compris dans un dispositif (101) connecté au réseau de communication, un agent conversationnel étant apte à interpréter et répondre automatiquement à des commandes envoyées par message par le terminal, le terminal étant **caractérisé en ce qu'**il comporte des moyens:
- de réception (409) d'un identifiant de l'agent conversationnel par un message reçu de l'agent conversationnel,
- d'obtention (407) d'au moins une règle de restitution des messages échangés associée à l'identifiant de l'agent conversationnel reçu en réponse à une requête vers une base de données (103), et
- de mise en œuvre (402, 405) de la au moins une règle de restitution obtenue lorsqu'un message est émis vers l'agent conversationnel ou reçu de l'agent conversationnel.

8. Programme d'ordinateur comportant des instructions pour l'exécution du procédé de restitution selon l'une quelconque des revendications 1 à 6, lorsque le programme est exécuté par un processeur.

9. Support d'informations lisible par un ordinateur sur lequel est enregistré un programme d'ordinateur comprenant des instructions pour l'exécution des étapes du procédé de restitution selon l'une des revendications 1 à 6.

## Patentansprüche

1. Verfahren zur Wiedergabe mehrerer Nachrichten auf einem Endgerät, die mittels eines Kommunikationsnetzes (102) zwischen dem Endgerät (100) und einem Gesprächsagenten (104) ausgetauscht werden, der in einer Vorrichtung (101) umfasst ist, die mit dem Kommunikationsnetz verbunden ist, wobei ein Gesprächsagent geeignet ist, Befehle, die durch Nachricht von dem Endgerät übermittelt werden, automatisch zu interpretieren und zu beantworten, wobei das Verfahren **dadurch gekennzeichnet ist, dass** es die folgenden Schritte umfasst, die von dem Endgerät (100) durchgeführt werden:
Empfangen (200) eines Identifikators des Gesprächsagenten (104) durch eine von dem Gesprächsagenten empfangene Nachricht,
- Erhalten (201) mindestens einer Regel zur Wiedergabe der ausgetauschten Nachrichten, die dem empfangenen Identifikator des Gesprächsagenten zugeordnet ist, in Reaktion auf eine Anfrage an eine Datenbank (103), und
- Anwenden (204) der mindestens einen erhaltenen Wiedergaberegel, wenn eine Nachricht an den Gesprächsagenten gesendet oder von dem Gesprächsagenten empfangen wird.

2. Verfahren nach Anspruch 1, **dadurch gekennzeichnet, dass** die mindestens eine Regel zur Wiedergabe der ausgetauschten Nachrichten zusammen mit dem Identifikator des Gesprächsagenten in der Datenbank gespeichert ist, die dem Endgerät zugeordnet ist, und über diese Datenbank erhalten wird.

3. Verfahren nach einem der vorhergehenden Ansprüche, **dadurch gekennzeichnet, dass** der Schritt des Anwendens der mindestens einen Regel das Löschen mindestens einer zuvor ausgetauschten Nachricht, wenn eine neue Nachricht ausgetauscht wird, umfasst.

4. Verfahren nach einem der vorhergehenden Ansprüche, **dadurch gekennzeichnet, dass** es ferner einen Schritt des Erhaltens einer Beschreibung der Benutzerschnittstelle in Abhängigkeit von dem empfangenen Identifikator und einen Schritt der Wiedergabe einer der Beschreibung entsprechenden Benutzerschnittstelle auf einem Bildschirm des Endgeräts umfasst.

5. Verfahren nach Anspruch 4, **dadurch gekennzeichnet, dass** die mindestens eine Wiedergaberegel eine Zuordnung zwischen einer bestimmten Nachricht und einem Element der wiedergegebenen Benutzerschnittstelle umfasst.

6. Verfahren nach einem der Ansprüche 4 und 5, **dadurch gekennzeichnet, dass** die mindestens eine Wiedergaberegel eine Zuordnung zwischen einer zu übertragenden Nachricht und einem Element der Benutzerschnittstelle umfasst.

7. Endgerät, das eine Vorrichtung zur Wiedergabe umfasst, die geeignet ist, mehrere Nachrichten wiederzugeben, die mittels eines Kommunikationsnetzes (102) zwischen dem Endgerät (100) und einem Gesprächsagenten (104) ausgetauscht werden, der in einer Vorrichtung (101) umfasst ist, die mit dem Kommunikationsnetz verbunden ist, wobei ein Gesprächsagent geeignet ist, Befehle, die durch Nachricht von dem Endgerät übermittelt werden, automatisch zu interpretieren und zu beantworten, wobei das Endgerät **dadurch gekennzeichnet ist, dass** es Mittel umfasst zum:
- Empfangen (409) eines Identifikators des Gesprächsagenten durch eine von dem Gesprächsagenten empfangene Nachricht,
- Erhalten (407) mindestens einer Regel zur Wiedergabe der ausgetauschten Nachrichten, die dem empfangenen Identifikator des Gesprächsagenten zugeordnet ist, in Reaktion auf eine Anfrage an eine Datenbank (103), und
- Anwenden (402, 405) der mindestens einen erhaltenen Wiedergaberegel, wenn eine Nachricht an den Gesprächsagenten gesendet oder von dem Gesprächsagenten empfangen wird.

8. Computerprogramm, das Anweisungen zur Ausführung des Wiedergabeverfahrens nach einem der Ansprüche 1 bis 6, wenn das Programm von einem Prozessor ausgeführt wird, umfasst.

9. Computerlesbarer Informationsträger, auf dem ein Computerprogramm gespeichert ist, das Anweisungen zur Ausführung der Schritte des Wiedergabeverfahrens nach einem der Ansprüche 1 bis 6 umfasst.

## Claims

1. Method for rendering, on a terminal, a plurality of messages exchanged by way of a communication network (102) between the terminal (100) and a conversational agent (104) contained in a device (101) connected to the communication network, a conversational agent being able to interpret and respond automatically to commands sent through a message by the terminal, the method being **characterized in that** it comprises the following steps, implemented by the terminal (100):
- receiving (200) an identifier of the conversational agent (104) through a message received from the conversational agent,
- obtaining (201) at least one rule for rendering the exchanged messages, associated with the identifier of the conversational agent received in response to a request to a database (103), and
- implementing (204) the at least one obtained rendering rule when a message is sent to the conversational agent or received from the conversational agent.

2. Method according to Claim 1, **characterized in that** the at least one rule for rendering the exchanged messages is recorded in association with the identifier of the conversational agent in the database associated with the terminal and is obtained via this database.

3. Method according to either one of the preceding claims, **characterized in that** the step of implementing the at least one rule comprises deleting at least one previously exchanged message when a new message is exchanged.

4. Method according to any one of the preceding claims, **characterized in that** it furthermore comprises a step of obtaining a user interface description on the basis of the received identifier and a step of rendering a user interface corresponding to said description on a screen of the terminal.

5. Method according to Claim 4, **characterized in that** the at least one rendering rule comprises an association between a particular message and an element of the rendered user interface.

6. Method according to either one of Claims 4 and 5, **characterized in that** the at least one rendering rule comprises an association between a message to be transmitted and an element of the user interface.

7. Terminal comprising a rendering device able to render a plurality of messages exchanged by way of a communication network (102) between the terminal (100) and a conversational agent (104) contained in a device (101) connected to the communication network, a conversational agent being able to interpret and respond automatically to commands sent through a message by the terminal, the terminal being **characterized in that** it comprises:
- reception means (409) for receiving an identifier of the conversational agent through a message received from the conversational agent,
- obtaining means (407) for obtaining at least one rule for rendering the exchanged messages, associated with the identifier of the conversational agent received in response to a request to a database (103), and
- implementation means (402, 405) for implementing the at least one obtained rendering rule when a message is sent to the conversational agent or received from the conversational agent.

8. Computer program comprising instructions for executing the rendering method according to any one of Claims 1 to 6 when the program is executed by a processor.

9. Computer-readable information medium on which there is recorded a computer program comprising instructions for executing the steps of the rendering method according to one of Claims 1 to 6.
